# EUROPEAN PATENT APPLICATION

(11) **EP 3 219 816 A1**
(43) Date of publication of application: **20.09.2017**
(21) Application number: 15858623.0
(22) Date of filing: 11.11.2015
(51) Int. Cl.: C22B 25/06, C22B 7/00, C22B 9/02

(54) **DEVICE AND METHOD FOR RECOVERING TIN-LEAD SOLDER FROM SCRAP**

(30) Priority: 12.11.2014 RU 2014145417
(71) Applicant: Vtulkin, Denis Aleksandrovich, Samarskaya oblast, 446300 (RU)
(72) Inventor: Vtulkin, Denis Aleksandrovich, Samarskaya oblast, 446300 (RU)
(74) Representative: Sloboshanin, Sergej
(86) International application number: PCT/RU2015/000765
(87) International publication number: WO 2016/076764

(57) **Abstract**

The group of inventions relates to the processing of metal waste, and specifically to the recovery of tin-lead solder from electronic printed circuit board scrap. The technical result of the proposed technical solution is an increase in the productivity of the recovery of solder from scrap. The scrap is placed in a liquid-permeable and/or gas-permeable container, which is placed in a liquid or gaseous heat-transfer medium heated to or above the melting temperature of the tin-lead solder. After the tin-lead solder is melted, the heat-transfer medium is removed from the container, then, by means of rotation of the container, the melted tin-lead solder and the remains of the heat-transfer medium are removed from said container. The device comprises a hollow container, which is mounted in such a way as to be capable of rotation and is designed in the form of a body of revolution, and is liquid-permeable and/or gas-permeable in a radial direction from the axis of rotation. The container can be designed in the form of a drum, which can be vertically displaced and has perforated side walls.

## Description

The technical solution is related to the field of waste metal processing, and specifically to means of recovering tin-lead solder from electronic printed circuit board scrap.

The closest prior art, in terms of technical substance, to the claimed method and device are "A METHOD FOR RECLAMATION OF ITEMS CONTAINING SOLDER-JOINED COMPONENTS AND A DEVICE FOR CARRYING OUT SAID METHOD", described in patent RF 2089632 dated 17.08.1994, published on 10.09.1997, IPC C22B7/00, C22B25/06, furthermore the method includes positioning of the items, application of force to said items, heating, splitting off components and solder from the items, and their separation, wherein the items are positioned around the heating focal point, the action of centrifugal forces is used as the force action, heating is conducted at temperatures of 170 - 300°C, while splitting off of the components and solder is carried out at a separation factor value of 150-800g, wherein the action of the centrifugal forces is applied after the items have been heated up; the device comprises a thermally insulated housing, a heater with a support, a perforated baffle, an installation device with orifices, complete with a side wall, a bottom plate, mechanisms for fixing the items and a support element, component and solder receptacles, characterized in that the orifices in the installation device are machined in the side wall of said device, adjacent sections around the perimeter of the side wall are positioned at an equal distance from the central vertical axis of the device, the support element of the installation device is manufactured in the form of a shaft and installed vertically, in axial alignment with the device, the fixing mechanisms are designed to enable the items to be fixed around the periphery of the installation device, the heater is housed inside the installation device, while the perforated baffle is installed vertically between the thermally insulated housing and the installation device.

Recovery of tin-lead solder from electronic printed circuit board scrap using the device described in the prior art and the described method is not sufficiently effective. The low efficiency associated with using the method and device described in the prior art is due to the under-loading of the active capacity of the vessel and the high degree of manual labor in the production cycle. Moreover, substrates of electronic printed circuit boards, manufactured from glass-fiber laminate and paper-based laminate, are good heat insulators, which means it is impossible to evenly heat up any volume of printed circuit boards by using heat radiation alone, since in this case superheated areas may form, leading to pyrolysis of organic matter.

The object of this technical solution is to increase the efficiency with which tin-lead solder is recovered from electronic printed circuit board scrap.

The object is achieved by using a method for recovering tin-lead solder from electronic printed circuit board scrap, characterized in that the electronic printed circuit board scrap is placed in a liquid and/ or gas permeable vessel, which is positioned in a medium of liquid or gaseous heat transfer agent, heated up to, or above, the melting point of tin-lead solder, and then, when the tin-lead solder is molten, the heat transfer agent is removed from the vessel, after which, by rotating the vessel, the molten tin-lead solder and remaining heat transfer agent is removed from said vessel, as well as by using a device for recovering tin-lead solder from electronic printed circuit board scrap, characterized in that it comprises a hollow vessel, manufactured in the form of a rotary body, wherein the vessel is installed in a way which allows it to rotate, and is designed to be liquid and/or gas permeable in a radial direction, relative to the axis of rotation; the vessel is manufactured in the form of a drum; permeability of the vessel is achieved by virtue of perforation holes in the side walls of said vessel; the vessel is designed with a vertical displacement capability.

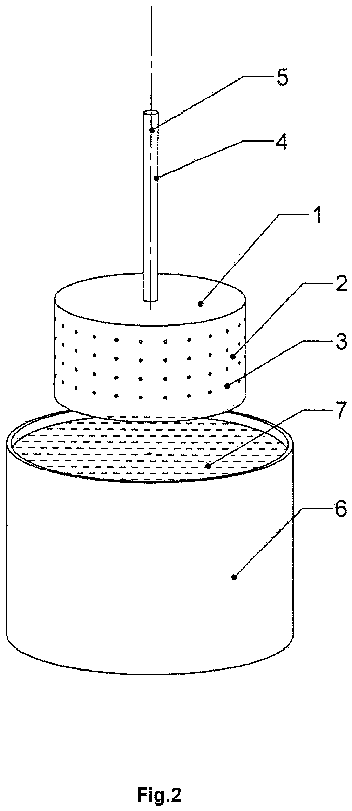

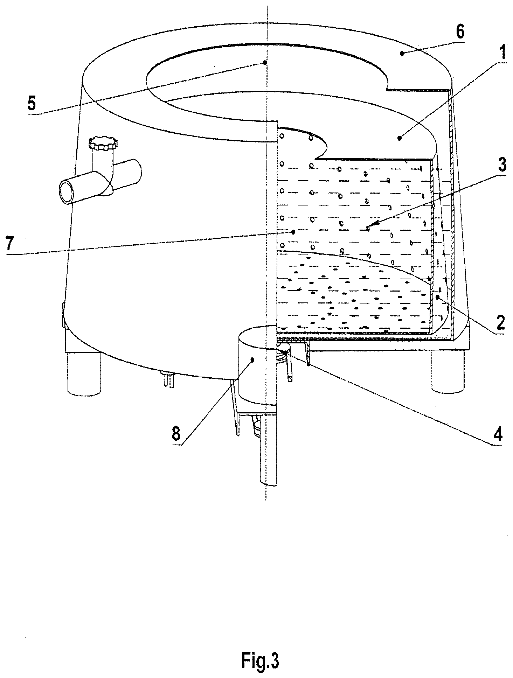

The substance of the technical solution is illustrated by drawings, where Fig.1 shows a device for recovering tin-lead solder from electronic printed circuit board scrap comprising a hollow vessel, designed with a vertical displacement capability, and positioned inside the vessel containing heat transfer agent, Fig.2 shows a device for recovering tin-lead solder from electronic printed circuit board scrap, comprising a hollow vessel, designed with a vertical displacement capability and positioned outside the vessel containing heat transfer agent, and Fig.3 shows a device for recovering tin-lead solder from electronic printed circuit board scrap comprising a hollow vessel, positioned inside the vessel containing heat transfer agent, without a vertical displacement capability.

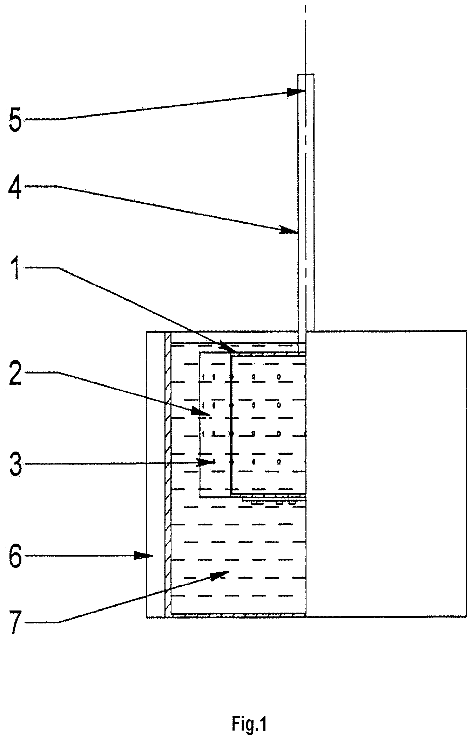

Fig.1 shows hollow vessel 1, permeable walls 2, perforation holes 3, shaft 4, rotational axis 5 of the hollow vessel, vessel 6 for containing heat transfer agent, heat transfer agent 7 and motor 8.

The device for recovering tin-lead solder from electronic printed circuit board scrap is realized in the following way.

The device for recovering tin-lead solder from electronic printed circuit board scrap comprises hollow vessel 1, manufactured in the form of a rotary body. Hollow vessel 1 is installed onto shaft 4 in a way that enables it to rotate around its axis 5. Vessel 1 is rotated using motor 8. Walls 2 of hollow vessel 1 are designed to be liquid and/or gas permeable in a radial direction, relative to rotational axis 5. As an option hollow vessel 1 can be manufactured in the form of a drum. As an option the permeability of vessel 1 can be achieved by means of perforation holes 3, made in side walls 2 of said vessel. Hollow vessel 1 can, as an option, be manufactured with a vertical displacement capability. The device comprises vessel 6, for containing heat transfer agent. Vessel 6, for containing heat transfer agent, can, as an option, be manufactured with an open top.

The method for recovering tin-lead solder from electronic printed circuit board scrap is carried out as follows.

Electronic printed circuit board scrap is placed in vessel 1, which is liquid and/or gas permeable. Then, vessel 1 together with the printed circuit board scrap is positioned in a medium of liquid or gaseous heat transfer agent 7, which has been heated up to, or above, the melting point of tin-lead solder. Positioning of vessel 1, containing the printed circuit board scrap in heat transfer agent 7, can be done, for instance, by vertically submerging said vessel 1 into heat transfer agent 7, or by filling vessel 1, containing the circuit boards, with heat transfer agent 7, having first positioned said vessel in a container which ensures no leakage of heat transfer agent. Heating up of heat transfer agent 7 can either be done in advance, or after vessel 1, containing the circuit board scrap has been positioned in said heat transfer agent. The tin-lead solder is melted in heated heat transfer agent 7. Then, when the tin-lead solder is molten, heat transfer agent 7 is removed from vessel 1, containing the circuit board scrap. Removal of heat transfer agent 7 from vessel 1, containing the circuit boards, is done, for instance by vertically extracting the vessel from heat transfer agent 7, or by pumping out said heat transfer agent. After this, as a result of the centrifugal force generated by rotating vessel 1, the molten tin-lead solder and remaining heat transfer agent 7 are removed from said vessel.

The device for recovering tin-lead solder from electronic printed circuit board scrap operates in the following way.

Electronic printed circuit board scrap is placed in hollow vessel 1. Then vessel 1, together with the printed circuit board scrap, is positioned in a medium of liquid or gaseous heat transfer agent 7, which has been heated up to, or above, the melting point of tin-lead solder, thereby ensuring contact between the circuit board scrap and heat transfer agent 7. For instance, hollow vessel 1 is lowered into vessel 6, which is open at the top and contains heat transfer agent 7, the latter having already been heated up to, or above, the melting point of tin-lead solder. Contact between the circuit board scrap and heat transfer agent 7 can also be achieved by pumping heat transfer agent 7 into the body of vessel 1 with the circuit boards. In this case hollow vessel 1 is first positioned in vessel 6, which ensures no leakage of heat transfer agent 7, and to which lines for supply and drain of heat transfer agent 7 are connected. Heating up of heat transfer agent 7 can either be done in advance, or after vessel 1, containing the circuit board scrap, has been positioned in said heat transfer agent, for instance using tubular heating elements. The tin-lead solder is melted in the heated heat transfer agent 7. Then, when the tin-lead solder is molten, heat transfer agent 7 is removed from vessel 1, containing the circuit board scrap. Removal of heat transfer agent from vessel 1, containing the circuit boards, can, for instance, be done by vertically extracting vessel 1 from heat transfer agent 7, or by pumping out said heat transfer agent. After this, as a result of the centrifugal force generated by rotating vessel 1, the molten tin-lead solder and remaining heat transfer agent 7 are removed from said vessel. The molten tin-lead solder is separated out from heat transfer agent 7 by, for example, using a process of decantation. By virtue of the fact that liquid or gaseous heat transfer agent 7 is used, the thermal energy is evenly distributed throughout the bulk of electronic printed circuit board scrap. In a production cycle, set up according to the operating principles of this device, it is possible to completely fill up the active capacity of hollow vessel 1 with printed circuit board scrap. Electronic printed circuit board scrap, whether intact or in fragmented form, can be used as processable feedstock.

The technical result of the proposed technical solution is an increase in the efficiency with which tin-lead solder is recovered from electronic printed circuit board scrap by virtue of a method for recovering tin-lead solder from electronic printed circuit board scrap, characterized in that the electronic printed circuit board scrap is placed in a liquid and/or gas permeable vessel, which is positioned in a medium of liquid or gaseous heat transfer agent heated up to, or above, the melting point of tin-lead solder, then, when the tin-lead solder is molten, the heat transfer agent is removed from the vessel, after which, by rotating the vessel the molten tin-lead solder and the remaining heat transfer agent are removed from said vessel, as well as by virtue of a device for recovering tin-lead solder from electronic printed circuit board scrap, characterized in that it comprises a hollow vessel, manufactured in the form of a rotary body, wherein the vessel is installed in a way which allows it to rotate and is designed to be liquid and/or gas permeable in a radial direction, relative to the rotational axis; the vessel is manufactured in the form of a drum; permeability of the vessel is achieved by virtue of perforated holes in the side walls of said vessel; the vessel is designed with a vertical displacement capability.

## Claims

1. A method for recovering tin-lead solder from electronic printed circuit board scrap, **characterized in that** the electronic printed circuit board scrap is placed in a liquid and/or gas permeable vessel, which is positioned in a medium of liquid or gaseous heat transfer agent, heated up to, or above, the melting point of tin-lead solder, then when the tin-lead solder is molten, the heat transfer agent is removed from the vessel, after which, by rotating the vessel, the molten tin-lead solder and remaining heat transfer agent are removed from said vessel.

2. A device for recovering tin-lead solder from electronic printed circuit board scrap, **characterized in that** it comprises a hollow vessel, manufactured in the form of a rotary body, wherein the hollow vessel is installed in a way which allows it to rotate and is designed to be liquid and/or gas permeable in a radial direction, relative to the rotational axis.

3. The device for recovering tin-lead solder from electronic printed circuit board scrap, as claimed in claim 2, **characterized in that** the vessel is manufactured in the form of a drum.

4. The device for recovering tin-lead solder from electronic printed circuit board scrap, as claimed in claims 2 and 3, **characterized in that** the permeability of the vessel is achieved by virtue of perforation holes in the side walls of said vessel.

5. The device for recovering tin-lead solder from electronic printed circuit board scrap, as claimed in claims 2 and 3, **characterized in that** the vessel is designed with a vertical displacement capability.
